# EUROPÄISCHE PATENTSCHRIFT

(11) **EP 3 469 281 B1**
(45) Veröffentlichungstag und Bekanntmachung des Hinweises auf die Patenterteilung: **26.08.2020**
(21) Anmeldenummer: 17731066.1
(22) Anmeldetag: 12.06.2017
(51) Int. Cl.: F27B 7/38, C04B 7/47, F27D 15/02, F28D 11/04

(54) **DREHROHRKÜHLER UND VERFAHREN ZUM BETREIBEN EINES DREHROHRKÜHLERS**
ROTARY TUBE COOLER AND METHOD FOR OPERATING A ROTARY TUBE COOLER
DISPOSITIF DE REFROIDISSEMENT À TUBES ROTATIFS ET PROCÉDÉ PERMETTANT DE FAIRE FONCTIONNER UN DISPOSITIF DE REFROIDISSEMENT À TUBES ROTATIFS

(30) Priorität: 14.06.2016 DE 102016007221
(43) Veröffentlichungstag der Anmeldung: 17.04.2019
(73) Patentinhaber: Allgaier Werke GmbH, 73066 Uhingen (DE)
(72) Erfinder: TROJOSKY, Mathias, 73230 Kirchheim unter Teck (DE); KIRCHNER, Karsten, 73072 Donzdorf (DE)
(74) Vertreter: Bosch Jehle Patentanwaltsgesellschaft mbH
(86) Internationale Anmeldenummer: PCT/EP2017/000687
(87) Internationale Veröffentlichungsnummer: WO 2017/215784

(56) Entgegenhaltungen:
- EP-A1- 0 567 467
- EP-A1- 2 889 569
- EP-A2- 0 217 113
- DE-C1- 10 230 511
- US-A- 4 131 418
- US-A- 4 377 202

## Beschreibung

Gegenstand der vorliegenden Erfindung ist ein Drehrohrkühler sowie ein Verfahren zum Bertreiben eines Drehrohrkühlers und ein Verfahren zum Kühlen eines Gutes.

Aus dem Stand der Technik sind verschiedene Vorrichtungen und Verfahren zum Kühlen von sehr heißen Produkten bekannt. In verschiedenen industriellen Bereichen, wie besonders der Metallurgie, der chemischen Industrie, der Baustoff- und Zementindustrie sowie der Recyclingindustrie werden Kühler zur Kühlung von sehr heißen Produkten wie beispielsweise gebrannten Pigmenten, Schlacken, Metalloxiden und -hydroxiden, Zementklinker, Eisenschwamm, Zunder, Aktivkohle, Katalysatoren, Koks, Hüttenwerks-Reststoffen etc. benötigt. Ohne eine Kühlung der sehr heißen Produkte ist eine weitere Prozessführung häufig nicht möglich. Vielfach sollen im Rahmen der technologisch notwendigen Kühlung die im Feststoff enthaltene Wärmeenergie wenigstens teilweise zurück gewonnen werden.

Es existieren daher verschiedene Technologien, d.h. Vorrichtungen und Verfahren zur Kühlung solcher Schüttgüter von z.B. 700 °C bis 1.400 °C Ausgangstemperatur auf Endtemperaturen von z.B. 80 °C bis 200 °C.

Neben der Verwendung von Kühlern, die einen direkten Kontakt von Umgebungsluft mit dem zu kühlenden Gut nutzen, werden für diese Aufgabe mit Luft oder mit Wasser indirekt betriebene Drehrohrkühler eingesetzt. "Indirekt" heißt, dass das Kühlmedium (Wasser oder Luft) nicht direkt mit dem zu kühlenden heißen Produkt in Berührung kommt, sondern ein Wärmeaustausch vom heißen Produkt über eine die Medien trennende Apparatewand an das Kühlmedium erfolgt.
Aus den Patentschriften US 1,218,873; US 2,283,129 und US 2,348,446 sind indirekt mit Luft betriebene Feststoffkühler bekannt, die sowohl mit einem einzigen, geschlossenen Trommelgehäuse arbeiten, als auch solche, die den Feststoff in mehreren Rohren innerhalb einer Trommel führen.

Weiterhin ist aus den Patentschriften DE 4406382 C2; DE 3331744 C2; US 3,829,282; US 3,920,381; US 4,021,195; US 4,089,634 und US 4;131; 418 bekannt, heißes Schüttgut, wie beispielsweise der in der Zementindustrie anfallende heiße und zu kühlende Klinker in mehreren um ein Austragsende eines Drehrohrofens angeordnete Rohre eingeführt und durch die Drehung des Ofens und damit der Kühlrohre gefördert wird. Bei derartigen Kühlern erfolgt die Kühlung der das heiße Produkt führenden Kühlrohre durch freie Konvektion der Umgebungsluft.

Bei den einfachsten Bauformen indirekt mit Wasser gekühlter Drehrohrkühler wird ein Drehrohr von außen mit Wasser besprüht oder die Trommel läuft durch ein Wasserbad, wie aus der Patentschrift US 4,557,804 beschrieben, wodurch die Oberfläche der drehenden Trommel mit Wasser benetzt wird und die Apparatewandung kühlt, während wiederum das heiße, in der Trommel befindliche Produkt durch Wärmeableitung an die gekühlte Apparatewand gekühlt wird.

Aus der EP 0 567 467 B1 ist ein Drehrohrkühler mit einem Drehrohr bekannt, welches sich innerhalb einer feststehenden, gemauerten Umhüllung dreht und bei dem das Kühlmedium (Luft oder Wasser) in dem zwischen dem Drehrohr und der Ausmauerung gebildeten Hohlraum strömt.

Eine ähnliche Lösung, in der der Trommelmantel durch ein von Kühlwasser durchströmtes Rohrsystem gebildet wird, ist aus den Patentschriften US 1,711,297; US 4,711,297 bzw. EP 0 217 113 A2; DE 3534991 A1 bekannt.

Die Bauform einer derartigen, einfachen Trommel bedingt eine geringe Oberfläche für den Wärmeaustausch und dadurch eine geringe Kühlleistung der Apparatur.
In der Patentschrift US 2,362,539 wird ein Kühler beschrieben, der mit mehreren auf einem kreisrunden Umfang angeordneten produktführenden Rohren arbeitet, wobei die Rohre zur Kühlung von oben mit Wasser besprüht werden und das Wasser in eine darunter liegende Wanne abläuft.

Eine weitere Bauform, welche insbesondere durch die Fa. Grenzebach sowie durch die Fa. GEA Barr-Rosin geliefert werden, sind sogenannte "Sektional-Kühler". Dabei werden zur Erhöhung der Wärmetauscherfläche z.B. 6 oder 8 Kammern ("Sektionen") geschaffen, die sich in einem Drehtrommel-Gehäuse befinden, wodurch ein Hohlraum zwischen den Kammern entsteht.

Ein Sektional-Kühler wird ferner in Dokument EP 2 889 569 A1 gezeigt. Dabei erfolgt der Transport des zu kühlenden Guts in polygon geformten Kammern innerhalb einer Trommel. Jede Kammer ist dazu bestimmt, das zu kühlende Gut vom Einlassende bis zum Auslassende der Trommel zu transportieren. Dazu erstreckt sich jede Kammer im Wesentlichen entlang der gesamten Trommellänge.

Zur Kühlung des in den Kammern ("Sektionen") befindlichen bzw. durch die Kammern geförderten heißen Produktes wird Kühlwasser durch die im Trommelgehäuse gebildeten Hohlräume zwischen den Sektionen geleitet. Die Zu- und Abführung des Kühlwassers erfolgt über ein abgedichtetes Drehgelenk auf der Seite des Produktaustrages der Trommel und Rohrverbindungen zu bzw. von den einzelnen Doppelrohren.

Derartige Sektional-Kühler weisen eine besondere Konstruktionsweise auf, die zu einem hohen Material- und Arbeitsaufwand in der Herstellung, speziell durch die erforderliche umfangreichen Schweißarbeiten führen. Das Trommelgehäuse selbst hat außerdem notwendigerweise ein hohes Gewicht, weil die Trommel und die Wandungen der Kammern aus Festigkeitsgründen dickwandig ausgeführt werden müssen. Beides führt zu einem hohen Gesamtgewicht der Apparatur.

Die Sektionalkühler führen das Kühlwasser in den jeweils unteren Sektionen, da Aufgrund der Schwerkraft nur diese mit Wasser durchströmt werden. Ein vollständiges Auffüllen der Sektionen mit Kühlwasser ist nicht möglich. Folglich werden die bei einer Drehung jeweils oben befindlichen Wandungen der Kammern ("Sektionen") sowie der darin befindliche heiße Feststoff nicht ständig und somit nicht optimal gekühlt.

Des Weiteren ist die Strömung des Kühlwassers in den durch die Sektionen gebildeten Hohlräumen nicht gleichmäßig, wodurch sich ein ungleichmäßiger Wärmeübergang zwischen den heißen Wandungen der Sektionen und dem Kühlwasser ausbildet.

Der Erfindung liegt somit die Aufgabe zugrunde, eine Vorrichtung und ein Verfahren bereitzustellen, mit Hilfe dessen die Nachteile des Standes der Technik, insbesondere der Sektionalkühler überwunden werden.

Diese Aufgabe wird durch den erfindungsgemäßen Drehkühler mit den Merkmalen gemäß Anspruch 1 sowie durch das Verfahren mit den Merkmalen gemäß Anspruch 17 bzw. 18 gelöst.

Der erfindungsgemäße Drehrohrkühler besteht aus einer Vielzahl von Transportrohren zum Transport von zu kühlendem Gut, wobei die Vielzahl von Transportrohren um eine Drehachse angeordnet sind und gemeinsam über einen Einfüllbereich mit zu kühlendem Gut befüllbar sind, wobei jedes Transportrohr im Wesentlichen konzentrisch in einem Kühlrohr angeordnet ist in dem ein Kühlmedium strömt und über die Wandung des Transportrohrs das zu kühlende Gut kühlt.

Vorteilhafterweise sind die Vielzahl der Transportrohre in Bereichen gebündelt angeordnet, wobei diese Bereiche zur Lagerung und/oder Rotation des Drehrohrkühlers geeignet sind. Diese Bereiche können als ringförmige Manschetten ausgebildet sein, die Aussparungen für die Aufnahme der Kühlrohre aufweisen. Vorteilhafterweise kann die Rotation des Drehrohrkühlers über einen Zahnkranz mit Kettenantrieb oder ein Ritzel erfolgen. Ebenso ist es möglich, den erfindungsgemäßen Drehrohrkühler über andere Antriebsvarianten zu rotieren.

Beispielsweise kann dies über einen Reibradantrieb mit angetriebenen Laufrollen erfolgen, auf denen der Laufring lagert. Ebenso ist es möglich, über einen Direktantrieb beispielsweise über einen Aufsteckgetriebemotor den erfindungsgemäßen Drehrohrkühler in Rotation zu versetzen.

Vorteilhafterweise münden die Vielzahl der Transportrohre in einem Bereich, in dem das zu kühlende Gut austritt, so dass in diesem Produktaustragsbereich das zu kühlende Gut unter einer niedrigeren Temperatur vorliegt.

Zweckmäßigerweise ist dieser Produktaustragsbereich zur Vermeidung von Stäuben im Wesentlichen abgeschlossen und verfügt über weiterführende Transportvorrichtungen.

Um den Transport des zu kühlenden Guts im Transportrohr vom Bereich des Produkteintrags bis zum Bereich des Produktaustrags zu gewährleisten, weisen die Transportrohre vorzugsweise eine Neigung zwischen 1 Grad bis 8 Grad, besonders bevorzugt, zwischen 2 Grad und 5 Grad auf.

Vorteilhafterweise sind die Vielzahl von Kühlrohren über Rohrleitungen miteinander verbunden und ermöglichen zudem, dass die Kühlrohre mit dem Kühlmedium unter Druck beaufschlagbar sind. Denn durch die Möglichkeit, die Kühlrohre mit Druck beaufschlagen zu können kann erreicht werden, dass das Kühlmedium im Rahmen der Kühlung heißer als 100°C werden kann, bevor ein Verdampfen des Kühlmediums beginnt. Neben Wasser sind auch andere Kühlmedien denkbar.

Insbesondere bei sehr heißem Schüttgut von bis zu 1400°C kann es vorteilhaft sein, wenn das Kühlmedium bis zu 160°C heiß werden kann. Dies ist jedoch nur möglich, wenn die Kühlrohre mit Druck beaufschlagt werden können. Die Konstruktion des erfindungsgemäßen Drehrohrkühlers erlaubt es, dass sowohl die Transport- als auch die Kühlrohre aus handelsüblichen Rohren hergestellt werden können. Damit entfallen aufwendige Schweißarbeiten, die bei der Herstellung der bekannten Drehrohrkühler notwendig sind. Zudem erleichtert die Verwendung von handelsüblichen Rohren druckbeaufschlagbare Kühler herzustellen.

Bei einer bevorzugten Ausführungsform der vorliegenden Erfindung ist es von Vorteil, wenn die Fließrichtung des Kühlmediums wahlweise entgegen oder mit der Transportrichtung des zu kühlenden Guts verläuft. Hierbei ist zu berücksichtigen, dass die Transportrichtung des zu kühlenden Guts durch die Neigung der Transportrohre vorgegeben ist. Erfindungsgemäß kann jedoch die Fließrichtung des Kühlmediums, bspw. des Kühlwassers geändert werden. Dabei ist zu beachten, dass der Wert des Temperaturunterschieds Δϑ zwischen dem zu kühlendem Gut und dem Kühlmedium, bspw. Kühlwasser stets möglichst groß sein sollte. Denn durch einen möglichst großen Temperaturunterschieds Δϑ wird die Kühlleistung optimiert.

Bei einem Gegenstrombetrieb ist die Fließrichtung des Kühlmediums der Transportrichtung des zu kühlenden Guts entgegen gesetzt. Bei einem Gleichstrombetrieb weisen beide dieselbe Transportrichtung auf. Bei einer Mischform aus beiden Varianten kann die Fließrichtung des Kühlmediums auch unter einem Winkel von bis zu 90° in einem sogenannten Kreuzgegenstrom oder Kreuzgleichstrom verlaufen.

Vorteilhafterweise sind innerhalb der Transportrohre Elemente vorgesehen sind, die ein Durchmischen und Umwälzen sowie den Transport des zu kühlenden Guts fördern. Das Durchmischen und Umwälzen des zu kühlenden Gutes hat den Vorteil, dass immer frisches zu kühlendes Gut mit der Wand des Transportrohres in Kontakt gebracht wird und so der Temperaturunterschieds Δϑ zwischen der Wand des Transportrohres und der Außenwand des Transportrohrs, das von dem Kühlmedium umspült wird, möglichst groß ist. Denn die eigentliche indirekte Kühlung des zu kühlenden Guts findet über das Transportrohr statt, welches vom Kühlmedium umströmt wird.

Ein ständiges Durchmischen und Umwälzen des zu kühlenden Guts im Transportrohr stellt hierbei sicher, dass die Temperaturverteilung innerhalb eines Abschnitts im Transportrohr möglichst homogen ist.

Ferner kann es vorteilhaft sein, wenn im Inneren jedes Transportrohrs zusätzliche Rippen und Leitbleche angeordnet sind, die die innere Oberfläche der Transportrohrs vergrößern und somit den Wärmeübergang und das Durchmischen günstig beeinflussen.

Vorteilhafterweise sind diese Elemente im Wesentlichen in Längsrichtung der Transportrohre angeordnet. Es ist aber auch möglich, diese Elemente in Form von Rippen und Leitblechen zur Erzeugung von Verwirbelungen, Durchmischung, Umwälzung und Transport des zu kühlenden Guts in Form von einer oder mehreren Strukturen auszubilden. Diese Strukturen können fest oder herausnehmbar ausgebildet sein. Diese können als austauschbare Einsätze ausgebildet sein und aus einer Art Korb bestehen, der bzw. die in das Transportrohr eingeschoben werden. Besonders vorteilhaft ist hierbei, dass diese Einsätze in der Herstellung günstig, zur Reinigungs- und Wartungszwecke leicht aus dem Transportrohr entnehmbar sind und in Ihrer Form und Funktion an die Natur des zu kühlenden Guts angepasst werden können. Bei Schüttgut mit kleineren Partikeln kann es vorteilhaft sein, nur einen Korbeinsatz zu verwenden, der mit einer Vielzahl von Leitblechen und Durchmischungshilfen ausgestattet ist. Bei Schüttgut mit größeren Partikeln kann es vorteilhaft sein, einen Korbeinsatz zu verwenden, der eine geringere Anzahl von Leitblechen und Durchmischungshilfen aufweist. Ebenso ist es möglich, mit einer Vielzahl von Korbeinsätzen, das Durchmischen entsprechend der Kühlleistung zu optimieren. So kann es zweckmäßig sein, zu Beginn der Kühlung eine gröbere, d.h. schlechtere Durchmischung zu veranlassen, die im Laufe der Kühlung, d.h. während des Transports zum Produktaustrag hin besser wird. Durch Korbeinsätze mit unterschiedlichen Formen und Leitblechen ist eine Anpassung an das gewünschte Kühl-, Durchmischungs- und Umwälzungsverhalten möglich.

Zur weiteren Verbesserung der Kühlleistung ist es erfindungsgemäß vorgesehen, dass der Ringspalt zwischen Transportrohr und Kühlrohr Elemente aufweist, die eine turbulente Strömung des Kühlmediums begünstigt. Eine turbulente Strömung im Ringspalt ist vorteilhaft, weil dadurch die Temperaturverteilung im Kühlmedium gleichmäßiger verteilt wird als bei einer laminaren Strömung. Hierbei sind die Erkenntnisse, die zu einem Durchmischen im Transportrohr führen auch auf das Kühlrohr zu übertragen. Je höher der Temperaturunterschieds Δϑ zwischen der äußeren Oberfläche des Transportrohrs und der inneren Oberfläche des Transportrohrs ist, desto besser ist die Kühlleistung. Um dies zu erreichen, ist es vorteilhaft, wenn das Kühlmedium bestmöglich durchmischt ist; dies wird durch eine turbulente Strömung erreicht.

Vorteilhafter Weise sind im Ringspalt zwischen Transportrohr und Kühlrohr mindestens ein Strömungsrichtungselement vorgesehen ist. Das erfindungsgemäße Strömungsrichtungselement ist zweckmäßigerweise auf der Außenwand des Transportrohrs angeordnet und kann unterschiedliche Formen aufweisen. Diese Formen können beispielsweise als Prallfläche oder als Leitflächen ausgebildet sein, oder eine Mischform aus diesen beiden Elemententypen. Ferner ist es möglich, dass zusätzlich zu den flächigen Elementen zur Ablenkung der Strömung auch vereinzelt Strömungsrichtungselemente vorgesehen sind, die im Wesentlichen punktuell ausgebildet sind und somit eine turbulente Strömung erzeugen.

Bei einer bevorzugten Ausführungsform der vorliegenden Erfindung ist das mindestens eine Strömungsrichtungselement in Form einer Schraubwindung auf der Außenwand eines Transportrohrs angeordnet.

Dieses erfindungsgemäße Strömungsrichtungselement kann durch Aufbringen eines Leitbleches auf der Außenwand des Transportrohrs, beispielsweise durch Aufschweißen ausgebildet werden. Nach Fertigstellung dieses Strömungsrichtungselements wird das Transportrohr in das Kühlrohr geschoben, wobei das Strömungsrichtungselement nicht an der Innenseite des Kühlrohrs zu liegen kommen muss.
Zur Verbesserung der turbulenten Strömung kann es sinnvoll sein, wenn ein zweites Strömungsrichtungselement auf der Außenwand des Transportrohrs angeordnet wird. Das zweite Strömungsrichtungselement kann zweckmäßigerweise so angeordnet werden, dass es auf der Außenwand um 180° versetzt ist und ebenfalls die Form einer Schraubenwindung aufweist.

Vorteilhafterweise sind weitere Strömungsrichtungselemente dieser Art auf der Außenwand des Transportrohrs angebracht. Neben der Fixierung durch Schweißen ist es erfindungsgemäß denkbar, dass die Strömungsrichtungselemente lösbar mit dem Transportrohr verbunden sind, um diese entweder leichter warten zu können, oder um die turbulente Strömung durch bestimmte Schikanen der Leitflächen optimal einstellen zu können.

Die erfindungsgemäße Ausführung der Kühlmediumführung im erfindungsgemäßen Drehrohrkühler führt zu einem vollständigen Umspülen der gesamten zur Verfügung stehenden Wärmeübergangsfläche sowie zu einer gerichteten Strömung des Kühlmediums und damit zu einer Verbesserung der Kühlleistung gegenüber bekannten Kühlerausführungen.

Eine weitere Ausführungsform des vorliegenden Drehrohrkühlers weist anstatt der ineinander liegenden Rohre bestehend aus Kühl- und Transportrohr ein produktführendes Rohr und aus einem auf dessen Außenseite beispielsweise durch Punktschweißung aufgeschweißtes, umhüllendes Blech auf. Das umhüllende Blech wird zur Herstellung eines das Kühlmedium führende Volumen mit Hochdruck aufgeblasen. Durch den entstehenden Hohlraum wird das Kühlmedium geleitet. Derartig hergestellte und in der Praxis als Standard-Zukaufsteile verfügbare, doppelwandige Wärmetauscherrohre können das Gewicht des erfindungsgemäßen Drehrohrkühlers weiter reduzieren.

Bei einer weiteren Ausführungsform der vorliegenden Erfindung sind die Kühlrohre mit Kompensatoren ausgestatten, die thermische Spannungen kompensieren. Thermische Spannungen können in der gesamten Vorrichtung durch die hohen Temperaturunterschiede zwischen den Transport- und Kühlrohren auftreten. Wird beispielsweise ein Schüttgut mit ca. 1.000°C in den Einfüllkonus gefüllt, so wird sich das Transportrohr an dessen Innenseite sehr schnell auf diese Anfangstemperatur aufheizen. Der Temperaturverlauf zwischen Schüttgut und Außenwand des Kühlrohrs führt gerade zu Beginn des Kühlungsprozesses in der Nähe des Einfüllkonuses zu einem sehr raschen Abfall der Temperatur über den Querschnitt, d.h. vom Schüttgut über das Transportrohr, das Kühlmedium und schließlich in die Außenwand des Kühlrohrs. Konstruktionsbedingt liegen das Transportrohr und das Kühlrohr gerade im Einfüllbereich in örtlicher Nähe zueinander und sind über Konstruktionselemente miteinander verbunden. Diese örtliche Nähe führt dazu, dass auf kleinem Raum besonders hohe Temperaturunterschiede auftreten, die für die Bauteile eine hohe thermische Belastung sind. Zur Vermeidung von Rissen und Brüchen, insbesondere von Rohren, die unter Druck stehen und sehr heißes Kühlmedium führen, ist es erfindungsgemäß vorteilhaft in den Kühlrohren mindestens einen Kompensator vorzusehen, der dazu geeignet ist, thermische Spannungen zu kompensieren.

Bei einer weiteren Ausführungsform der vorliegenden Erfindung wird der Kühlungsprozess bereits im Bereich des Produkteintrags begonnen. Vorteilhafterweise wird der Konus zur Einführung des zu kühlenden, heißen Feststoffes doppelwandig ausgeführt und optional in den Kühlmediumskreislauf eingebunden. Somit können bereits erste Kühlungseffekte sehr frühzeitig im Prozessablauf realisiert werden.

Das erfindungsgemäße Verfahren verwendet einen Drehrohrkühler gemäß vorliegender Beschreibung und Figuren.

Das erfindungsgemäße Verfahren zum Kühlen von Schüttgut besteht aus den Schritten:
1. Einbringen eines zu kühlenden Gutes in mindestens ein Transportrohr, welches von einem Kühlrohr umschlossen ist, in dem ein Kühlmedium strömt;
2. Transport des zu kühlenden Gutes von einem Ende des mindestens einen Transportrohrs zu dessen anderen Ende, wobei das zu kühlende Gut ständig von dem Kühlmedium gekühlt wird;
3. Ständiges Rotieren der Transportrohre um eine Achse;
4. Ausbringen des gekühlten Guts.

Vorteilhafterweise umfasst das erfindungsgemäße Verfahren den weiteren Verfahrensschritt, wonach das Kühlmedium durch Schikanen im Ringspalt zwischen Transportrohr und Kühlrohr in Turbulenzen versetzt wird.

Eine bevorzugte Ausführungsform der vorliegenden Erfindung wird anhand der Zeichnungen näher erläutert.

Es zeigen:
Fig. 1 eine schematische Übersicht des erfindungsgemäßen Drehrohkühlers;
Fig. 2 eine schematische Schnittdarstellung durch die Rohrbündel des erfindungsgemäßen Drehrohrkühlers;
Fig. 3 eine schematische Schnittdarstellung durch ein Transport - und Kühlrohrgebinde des erfindungsgemäßen Drehrohrkühlers;
Fig. 4 eine schematische Darstellung eines Längsschnitts durch ein Transport- und Kühlrohr des erfindungsgemäßen Drehrohrkühlers;
Fig. 5 eine schematische Darstellung eines Querschnitts durch ein Transport- und Kühlrohr des erfindungsgemäßen Drehrohrkühlers;
Fig. 6 eine schematische Darstellung auf ein Transportrohr und eines Längsschnitts durch ein Kühlrohr des erfindungsgemäßen Drehrohrkühlers;
Fig. 7 eine schematische Darstellung auf eine Transportrohr und eines Längsschnitts durch ein Kühlrohr mit erfindungsgemäßen Kompensator des erfindungsgemäßen Drehrohrkühlers;
Fig. 8 eine schematische Darstellung eines exemplarischen Temperaturverlaufs im Rohrquerschnitt des erfindungsgemäßen Drehrohrkühlers.

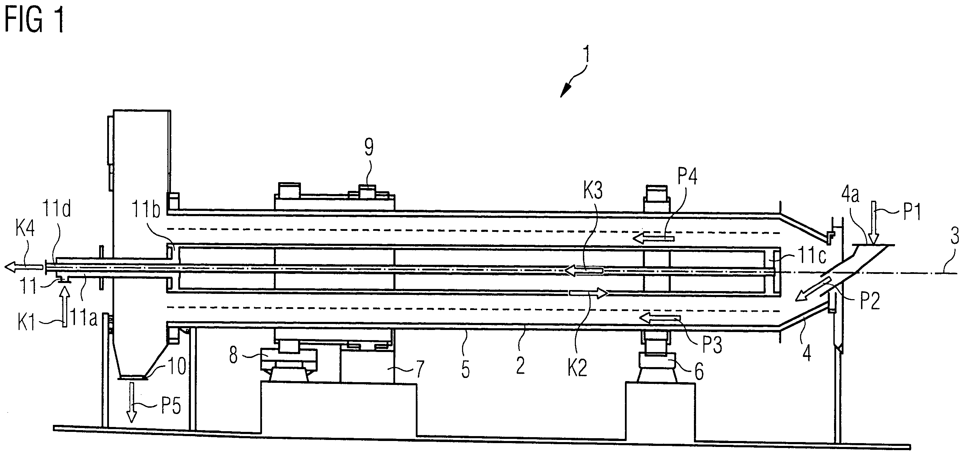

Figur 1 zeigt eine schematische Ansicht mit Teilschnitten eines erfindungsgemäßen Drehrohrkühlers 1. Im bestimmungsgemäßen Gebrauch wird das zu kühlende Gut (ohne Bezugszeichen) in den Produkteintrag 4a des Einfüllkonus 4 geschüttet. Der Transport des zu kühlenden Guts kann über unterschiedliche Wege erfolgen. Nach dem Eintrag in den Produkteintrag 4a fällt das zu kühlende Gut aufgrund der Schwerkraft nach unten in Pfeilrichtung P1. Dem Produkteintrag nachgelagert sind die Rohrbündel der Transportrohre 2, die von den Kühlrohren 5 im Wesentlichen konzentrisch umschlossen werden. Die Anzahl der Transportrohre 2 kann zwischen 3 und 9 liegen, wobei grundsätzlich keine Obergrenze vorhanden ist. Maßgeblich für die Anzahl der Transport- und Kühlrohre ist die Beherrschbarkeit der Massen und die Sicherstellung der gleichmäßigen Rotation der Rohrbündel.

Gemäß Figur 1 sind die Transportrohre 2 zusammen mit den Kühlrohren 5 um eine Rotationsachse 3 angeordnet und drehen sich, angetrieben durch einen Zahnkranz oder Kettenantrieb 9 über der Lagerung 7. Zur Abstützung des erfindungsgemäßen Drehrohrkühlers liegt dieser zweckmäßig auf Lagern auf, wobei diese als Laufringe 6, 8 ausgebildet sind. Die Position der Laufringe 6, 8 bestimmt sich nach den Abmessungen des erfindungsgemäßen Drehrohrkühlers. Eine größere Anzahl von Lagern kann bei anderen Abmessungen sinnvoll sein.

Aufgrund der Schwerkraft wird das zu kühlende Gut entlang der Pfeile P2 und P3 in die unten liegenden Transportrohre 2 (im vorliegenden Schnittbild ist dies nur ein Transportrohr 2) transportiert und schiebt sich durch den Neigungswinkel der Transportrohre zwischen 1° und 9° entlang der eingezeichneten Pfeile P3 und P4 in Figur 1 nach links. In den Transportrohren sind Elemente vorgesehen (nicht in Figur 1 dargestellt), die den Transport, das Umwälzen, das Umschichten und Durchmischen des zu kühlenden Guts begünstigen und fördern.

Die Transportrohre 2 sind von einem Ringspalt umgeben, der durch die Kühlrohre 5 begrenzt wird (siehe im Detail in den nachfolgenden Figuren). Durch diesen Ringspalt fließt das Kühlmedium, beispielsweise Wasser. Das Kühlmedium wird über einen Kreislauf 11, 11a, 11b, 11c und 11d in die Kühlrohre 5 eingeleitet und abgeführt. Gemäß Figur 1 fließt das Kühlmedium durch den Einlass 11 in Pfeilrichtung K1 mit einer ersten Temperatur beispielsweise ca. 10°C in den Kühlkreislauf und von dort über speichenartige Zuleitungen 11b in die Kühlrohre 5. Das Kühlmedium wird auf diese Weise im Gegenstrom zum Kühlen des zu kühlenden Guts transportiert.

Am Ende des Kühlrohrs 5 fließt das Kühlmedium durch speichenartige Ableitungen 11c in Pfeilrichtung K3 in ein zentrales Abflussrohr 11d und verlässt dort in Pfeilrichtung K4 den Kühlkreislauf. Das zu kühlenden Gut wird in den Transportrohren 2 bis zum Produktaustrag 10 gefördert und verlässt dort, vorzugsweise aufgrund Schwerkraft den erfindungsgemäßen Drehrohrkühler in Pfeilrichtung P5.

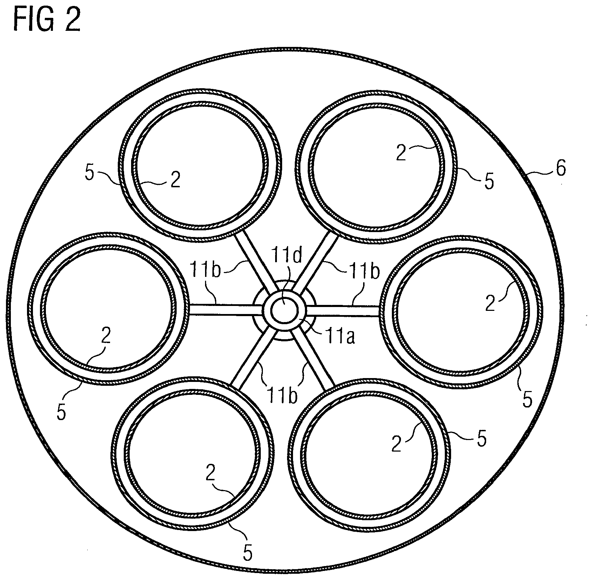

Figur 2 zeigt eine schematische Schnittdarstellung durch die Rohrbündel des erfindungsgemäßen Drehrohrkühlers mit, wie in diesem Ausführungsbeispiel gewählt, sechs Kühlrohren 5 und sechs Transportrohren 2. Das Kühlmedium wird durch das Rohr 11a in den Kühlkreislauf eingespeist. Von dort fließt das Kühlmedium über die Zuflußrohre 11b in die Kühlrohre 5. Die Zuflußrohre 11b sind speichenartig angeordnet und durch ihren vollrunden Querschnitt dazu geeignet, mit Druck beaufschlagt zu werden. Die Zuflußrohre 11b verdecken in Figur 2 die Abflußrohre 11c, die ebenfalls speichenartig angeordnet sind und durch die das Kühlmedium zurückfließt, um schließlich über die Leitung 11d den Kühlkreislauf wieder zu verlassen.

In den Kühlrohren 5 sind jeweils über einen Ringspalt getrennt, die Transportrohre 2 angeordnet, in denen das zu kühlende Gut transportiert wird.

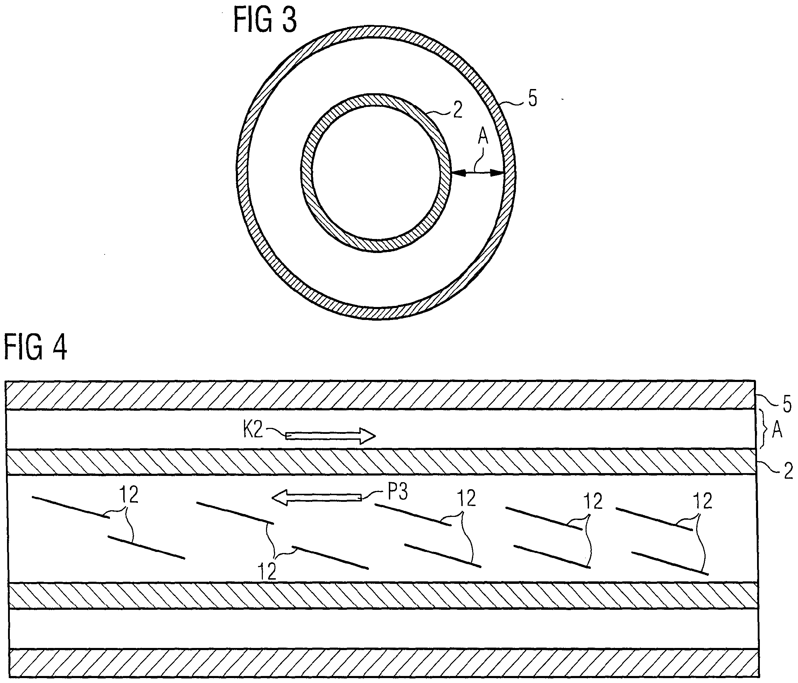

Figur 3 zeigt eine vergrößerte Schnittdarstellung durch ein Kühlrohr 5 und ein Transportrohr 2, wobei die Größenverhältnisse der Abmessungen nicht der Realität entsprechen. Der Ringspalt A durch den das Kühlmedium strömt, ist so zu bemessen, dass sowohl der Wärmetausch als auch der Abtransport des Kühlmediums optimiert wird. Hierzu ist es vorteilhaft, dass eine möglichst turbulente Strömung im Ringspalt aufgebaut wird. Die Wandstärke des Transportrohrs 2 sollte so bemessen sein, dass der Wärmeaustausch möglich rasch von statten gehen kann. Je dünner die Wandstärke ist, desto schneller wird die Wärme aus dem zu kühlenden Gut abgeführt. Allerdings geht eine dünne Wandstärke zu Lasten der Stabilität des Transportrohrs 2. Hierzu gilt es, eine optimale Dimensionierung zu finden. Die Wandstärke des Kühlrohrs 5 ist sowohl für die Stabilität als auch für den Wärmetausch zur Umgebung relevant.

Figur 4 zeigt einen schematischen Längsschnitt durch ein Transportrohr 2 und ein Kühlrohr 5. Der Ringspalt A ist nicht maßstabsgerecht, ebenso sind die Wandstärken des Kühlrohrs 5 und des Transportrohrs 2 nicht maßstabsgerecht. Im Transportrohr 2 sind Elemente 12 angeordnet, die ein Durchmischen, Umwälzen und den Transport in Richtung P3 begünstigen und fördern. Zweckmäßigerweise ist die Anordnung der erfindungsgemäßen Kühlrohre 5 und Transportrohre 2 gegenüber der Horizontalen geneigt, vorzugsweise zwischen 1 Grad und 8 Grad, besonders bevorzugt zwischen 2 Grad und 5 Grad. Durch diese Neigung und die Verwendung der Elemente 12 wird ein Transport durch das Transportrohr 2 begünstigt. In der vorliegenden Ausführungsform fließt das Kühlmedium in Richtung K2, d.h. im Gegenstrombetrieb.

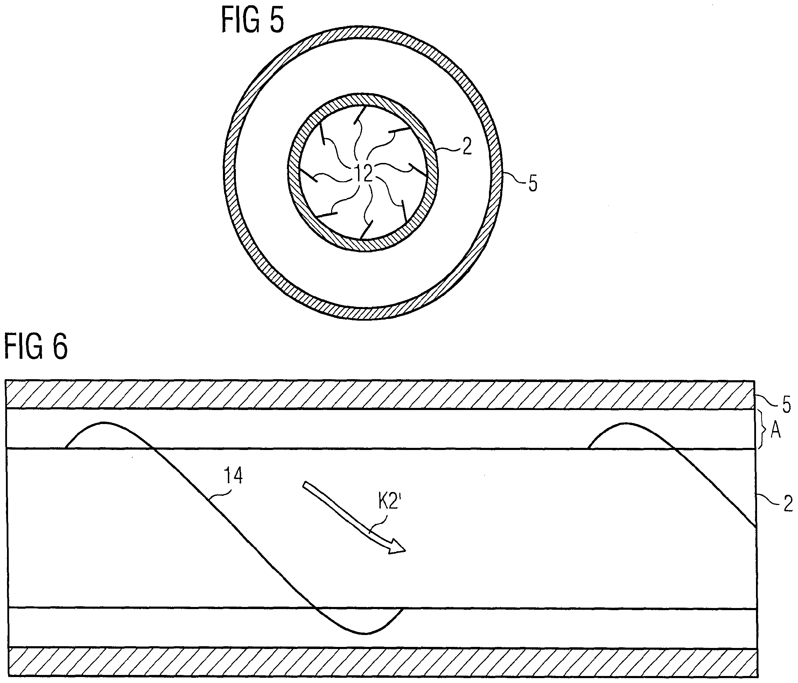

Figur 5 zeigt einen schematischen Querschnitt durch die erfindungsgemäße Anordnung gemäß Anspruch 4, wobei die Elemente 12 nicht maßstabsgerecht sind. Ebenso ist die Form der Elemente nur schematisch dargestellt. Ein Element 12 kann als gerade verlaufendes Leitblech ausgebildet sein, ebenso kann es eine Krümmung oder Durchbrüche aufweisen oder aus rührwerkartige Enden bestehen, die dazu dienen, ein für die gleichmäßige Temperaturverteilung günstige Durchmischen von zu kühlendem Gut zu bewirken. Ferner ist es möglich, dass Elemente in unterschiedlichen Temperaturzonen des Transportrohrs 2 unterschiedliche Formen aufweisen.

Figur 6 zeigt einen schematischen Längsschnitt durch ein Kühlrohr 5 und Strömungsrichtungselement 14, das auf der Außenwand des Transportrohrs 2 aufgebracht ist und so vollständig im Ringspalt A liegt. Das Strömungsrichtungselement 14 kann einteilig, wie dargestellt, oder mehrteilig sein. Das dargestellte Strömungsrichtungselement 14 läuft nach der Art einer Schraubenwindung um die Außenwand des Transportrohrs 2 und zwingt das Kühlmedium auf eine turbulente Strömungsbahn in Richtung des Pfeils K2'. Die Strömungsrichtung K2' weist zudem den Vorteil auf, dass der zurückgelegte Weg eines beliebigen Kühlmediumteilchens wesentlich länger ist, als die Länge des Kühlrohrs 2. Damit wird auch die Wärmeübertragung günstig beeinflusst, da das Kühlmedium länger Wärme aufnehmen kann als wenn es lediglich entlang der Länge des Kühlrohrs flöße. Zur weiteren Verbesserung der Turbulenzen im Kühlmedium, die für eine Durchmischung des Kühlmediums verantwortlich sind, kann es sinnvoll sein, die Stege des Strömungsrichtungselements 14 an einigen Stellen zu durchbrechen.

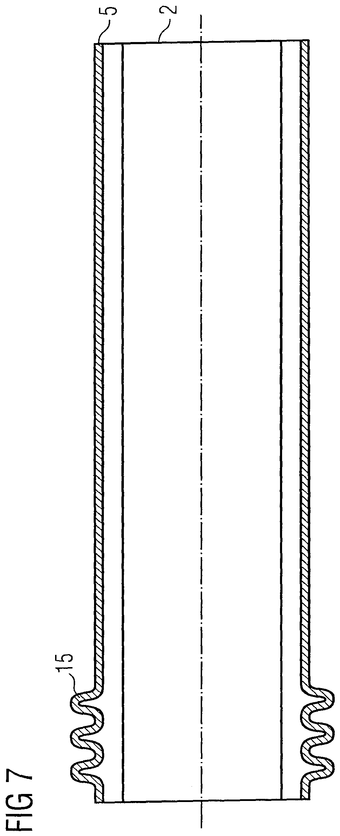

Figur 7 zeigt einen Schnitt durch ein Kühlrohr 5 mit Kompensatoren 15, die an einem Ende des Kühlrohrs 5 angeordnet sind. Der Kompensator 15 besteht aus einer Vielzahl von balgenförmigen Windungen. Durch hohe Temperaturunterschiede zwischen dem Kühlrohr und dem Kühlmedium können Spannungen im Kühlrohr 5 auftreten. Diese Spannungen, die sowohl in Längs- als auch Querrichtung des Kühlrohrs verlaufen können, werden durch den Kompensator 15 aufgenommen und abgebaut, da der Kompensator 15 baulich dazu in der Lage ist, derartigen Spannungen durch definierte Verformung nachzugeben.

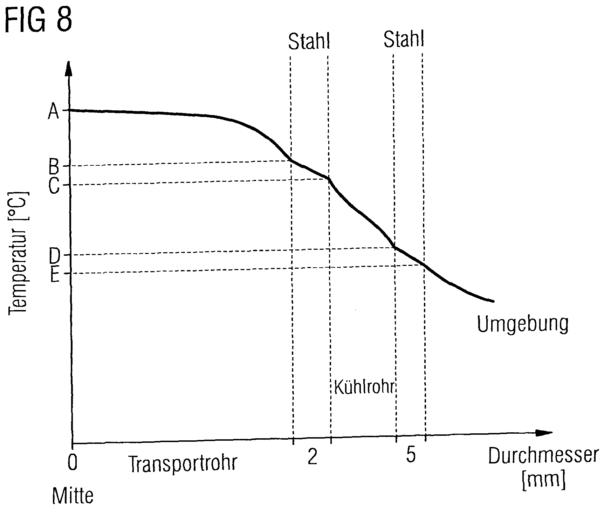

Figur 8 zeigt ein schematisches Temperaturdiagram über den Verlauf der Temperatur von der Mitte des Transportrohrs 2 bis zur Umgebungstemperatur außerhalb des Kühlrohrs 5. Unter der Annahme, dass das zu kühlende Gut mit einer Temperatur A°C in den Einfüllkonus geschüttet wird, wird sich das zu kühlende Gut bei Eintrag in ein Transportrohr im Kern bereits geringfügig abkühlen und die Temperatur nach außen hin stetig abnehmen. Sobald das zu kühlende Gut die Innenwand des Transportrohrs 2 berührt wird ein wesentlicher Abkühleffekt festzustellen sein, der in Figur 8 mit der Temperatur B°C bezeichnet ist. Der Temperaturverlauf in der Rohrwand des Transportrohres 2 wird im Wesentlichen linear verlaufen. An der Außenwand des Transportrohrs 2 läge demnach eine Temperatur von C°C an. Im Ringspalt des Kühlrohrs 5 und des Transportrohrs 2 fließt idealerweise das Kühlmedium in einer turbulenten Strömung, gleichwohl lässt sich ein Temperaturverlauf feststellen, der von einer höheren Temperatur C°C zu einer niedrigeren Temperatur D°C verläuft. In der Kühlrohrwandung lässt sich schließlich ein Temperaturverlauf von D°C bis E°C feststellen. Außerhalb des Kühlrohrs 5 liegt Umgebungstemperatur an.

## Patentansprüche

1. Drehrohrkühler (1) bestehend aus einer Vielzahl von Transportrohren (2) zum Transport von indirekt zu kühlendem Gut, wobei die Vielzahl von Transportrohren (2) um eine Drehachse (3) angeordnet sind und gemeinsam über einen Einfüllbereich (4) mit zu kühlendem Gut befüllbar sind, **dadurch gekennzeichnet, dass** jedes Transportrohr (2) konzentrisch in einem Kühlrohr (5) angeordnet ist und die indirekte Kühlung des zu kühlenden Guts über das Transportrohr stattfindet, das vom Kühlmedium umströmt wird_und über die Wandung des Transportrohrs (2) das zu kühlende Gut kühlt.

2. Drehrohrkühler (1) mit den Merkmalen gemäß Anspruch 1, **dadurch gekennzeichnet, dass** die Vielzahl der Transportrohre (2) in Bereichen (6, 7, 8) gebündelt angeordnet sind und diese Bereiche (6, 7, 8) zur Lagerung oder Rotation des Drehrohrkühlers (1) geeignet sind.

3. Drehrohrkühler (1) mit den Merkmalen gemäß Anspruch 2, **dadurch gekennzeichnet, dass** die Rotation über einen Zahnkranz mit Kettenantrieb (9) oder ein Ritzel erfolgt.

4. Drehrohrkühler (1) mit den Merkmalen gemäß einem der vorherigen Ansprüche, **dadurch gekennzeichnet, dass** die Vielzahl der Transportrohre (2) in einem Bereich münden, in dem das zu kühlende Gut austritt.

5. Drehrohrkühler (1) mit den Merkmalen gemäß einem der vorherigen Ansprüche, **dadurch gekennzeichnet, dass** die Transportrohre (2) vom Bereich des Produkteintrags (4, 4a) bis zum Bereich des Produktaustrags (10) geneigt sind.

6. Drehrohrkühler (1) mit den Merkmalen gemäß einem der vorherigen Ansprüche, **dadurch gekennzeichnet, dass** die Vielzahl von Kühlrohren (5) miteinander über Rohrleitungen verbunden sind.

7. Drehrohrkühler (1) mit den Merkmalen gemäß Anspruch 6, **dadurch gekennzeichnet, dass** die Kühlrohre (5) Druck beaufschlagbar sind.

8. Drehrohrkühler (1) mit den Merkmalen gemäß einem der vorherigen Ansprüche, **dadurch gekennzeichnet, dass** die Fließrichtung des Kühlmediums wahlweise entgegen oder mit der Transportrichtung des zu kühlenden Guts verläuft.

9. Drehrohrkühler (1) mit den Merkmalen gemäß einem der vorherigen Ansprüche, **dadurch gekennzeichnet, dass** innerhalb der Transportrohre (2) Elemente (12) vorgesehen sind, die ein Durchmischen und Umwälzen des zu kühlenden Guts fördern.

10. Drehrohrkühler (1) mit den Merkmalen gemäß Anspruch 9, **dadurch gekennzeichnet, dass** die Elemente (12) im Wesentlichen in Längsrichtung der Transportrohre (2) angeordnet sind.

11. Drehrohrkühler (1) mit den Merkmalen gemäß einem der vorherigen Ansprüche, **dadurch gekennzeichnet, dass** der Ringspalt (A) zwischen Transportrohr (2) und Kühlrohr (5) Elemente (12) aufweist, die eine turbulente Strömung des Kühlmediums begünstigt.

12. Drehrohrkühler (1) mit den Merkmalen gemäß einem der Ansprüche 1 bis 10, **dadurch gekennzeichnet, dass** mindestens ein Strömungsrichtungselement (14) im Ringspalt zwischen Transportrohr und Kühlrohr vorgesehen ist.

13. Drehrohrkühler (1) mit den Merkmalen gemäß Anspruch 12, **dadurch gekennzeichnet, dass** das mindestens ein Strömungsrichtungselement (14) auf der Außenwand eines Transportrohrs (2) angeordnet ist.

14. Drehrohrkühler (1) mit den Merkmalen gemäß Anspruch 13, **dadurch gekennzeichnet, dass** das mindestens ein Strömungsrichtungselement (14) in Form einer Schraubwindung auf der Außenwand eines Transportrohrs (2) angeordnet ist.

15. Drehrohrkühler (1) mit den Merkmalen gemäß einem der vorherigen Ansprüche, **dadurch gekennzeichnet, dass** die Kühlrohre (5) mit Kompensatoren (15) ausgestatten sind, die thermische Spannungen kompensieren.

16. Verfahren zum Kühlen von Schüttgut unter Verwendung eines Drehrohrkühlers mit den Merkmalen gemäß einem der Ansprüche 1 bis 15.

17. Verfahren zum Kühlen von Schüttgut gemäß Anspruch 16, bestehend aus den Schritten:
1. Einbringen eines zu kühlenden Gutes in ein Transportrohr, welches von einem Kühlrohr umschlossen ist, in dem ein Kühlmedium strömt, wobei das Kühlmedium Wasser ist;
2. Transport des zu kühlenden Gutes von einem Ende des Transportrohrs zu dessen anderen Ende, wobei das zu kühlende Gut ständig von dem Kühlmedium gekühlt wird;
3. Ständiges Rotieren der Transportrohre um eine Achse;
4. Ausbringen des gekühlten Transportguts.

18. Verfahren zum Kühlen von Schüttgut mit den Merkmalen gemäß Anspruch 17, weiterhin umfassend den Verfahrensschritt,
wonach das Kühlmedium durch Schikanen im Ringspalt zwischen Transportrohr und Kühlrohr in Turbulenzen versetzt wird.

## Claims

1. A rotary cooler (1) consisting of a plurality of transport tubes (2) for transporting material to be cooled indirectly, wherein the plurality of transport tubes (2) are arranged about an axis of rotation (3) and are adapted to be filled jointly via a filling region (4) with material to be cooled, **characterized in that** each transport tube (2) is arranged concentrically in a cooling tube (5) and the indirect cooling of the material to be cooled takes place via the transport tube which is flown around by cooling medium and cools the material to be cooled via the wall of the transport tube (2).

2. The rotary cooler (1) with the features of claim 1, **characterized in that** the plurality of transport tubes (2) are arranged in bundles in regions (6, 7, 8), and that these regions (6, 7, 8) are adapted for the bearing or rotation of the rotary cooler (1).

3. The rotary cooler (1) with the features of claim 2, **characterized in that** the rotation is performed via a gear ring with chain drive (9) or a sprocket.

4. The rotary cooler (1) with the features of any of the preceding claims, **characterized in that** the plurality of transport tubes (2) end in a region in which the material to be cooled exits.

5. The rotary cooler (1) with the features of any of the preceding claims, **characterized in that** the transport tubes (2) are inclined from the region of the product inlet (4, 4a) to the region of the product outlet (10).

6. The rotary cooler (1) with the features of any of the preceding claims, **characterized in that** the plurality of cooling tubes (5) are connected with each other via ducts.

7. The rotary cooler (1) with the features of claim 6, **characterized in that** the cooling tubes (5) are adapted to be pressurized.

8. The rotary cooler (1) with the features of any of the preceding claims, **characterized in that** the direction of flow of the cooling medium is optionally contrary to or in line with the direction of transport of the material to be cooled.

9. The rotary cooler (1) with the features of any of the preceding claims, **characterized in that** elements (12) are provided within the transport tubes (2) which promote the mixing and circulating of the material to be cooled.

10. The rotary cooler (1) with the features of claim 9, **characterized in that** the elements (12) are arranged substantially in the longitudinal direction of the transport tubes (2).

11. The rotary cooler (1) with the features of any of the preceding claims, **characterized in that** the annular gap (A) between the transport tube (2) and the cooling tube (5) comprises elements (12) favoring a turbulent flow of the cooling medium.

12. The rotary cooler (1) with the features of any of claims 1 to 10, **characterized in that** at least one flow directing element (14) is provided in the annular gap between the transport tube and the cooling tube.

13. The rotary cooler (1) with the features of claim 12, **characterized in that** the at least one flow directing element (14) is arranged on the outer wall of a transport tube (2).

14. The rotary cooler (1) with the features of claim 13, **characterized in that** the at least one flow directing element (14) is arranged on the outer wall of a transport tube (2) in the shape of a screw winding.

15. The rotary cooler (1) with the features of any of the preceding claims, **characterized in that** the cooling tubes (5) are provided with compensators (15) compensating thermal strains.

16. A method for cooling bulk material using a rotary cooler with the features of any of claims 1 to 15.

17. The method for cooling bulk material according to claim 16, comprising the steps of:
1. introducing material to be cooled in a transport tube which is enclosed by a cooling tube in which a cooling medium flows, wherein the cooling medium is water;
2. transporting the material to be cooled from one end of the transport tube to the other end thereof, wherein the material to be cooled is permanently cooled by the cooling medium;
3. rotating the transport tubes permanently about an axis;
4. outputting the cooled transport material.

18. The method for cooling bulk material with the features of claim 17, further comprising the method step
according to which the cooling medium is set to turbulences by baffles in the annular gap between the transport tube and the cooling tube.

## Revendications

1. Refroidisseur à tubes rotatifs (1) composé d'une pluralité de tubes de transport (2) pour le transport d'une matière à refroidir indirectement, dans lequel la pluralité de tubes de transport (2) sont disposés autour d'un axe de rotation (3) et peuvent être remplis ensemble de la matière à refroidir par une zone de remplissage (4), **caractérisé en ce que** chaque tube de transport (2) est disposé de manière concentrique dans un tube de refroidissement (5) et le refroidissement indirect de la matière à refroidir a lieu par le tube de transport autour duquel circule le milieu de refroidissement et qui refroidit la matière à refroidir par l'intermédiaire de la paroi du tube de transport (2).

2. Refroidisseur à tubes rotatifs (1) selon la revendication 1, **caractérisé en ce que** la pluralité de tubes de transport (2) sont disposés en faisceau dans des zones (6, 7, 8) et ces zones (6, 7, 8) sont appropriées au montage ou à la rotation du refroidisseur à tubes rotatifs (1).

3. Refroidisseur à tubes rotatifs (1) selon la revendication 2, **caractérisé en ce que** la rotation s'effectue par l'intermédiaire d'une couronne dentée à entraînement par chaîne (9) ou d'un pignon.

4. Refroidisseur à tubes rotatifs (1) selon l'une des revendications précédentes, **caractérisé en ce que** la pluralité de tubes de transport (2) débouchent dans une zone dans laquelle la matière à refroidir sort.

5. Refroidisseur à tubes rotatifs (1) selon l'une des revendications précédentes, **caractérisé en ce que** les tubes de transport (2) sont inclinés de la zone de l'entrée de produit (4, 4a) à la zone de la sortie de produit (10).

6. Refroidisseur à tubes rotatifs (1) selon l'une des revendications précédentes, **caractérisé en ce que** la pluralité de tubes de refroidissement (5) sont reliés entre eux par des conduites.

7. Refroidisseur à tubes rotatifs (1) selon la revendication 6, **caractérisé en ce que** les tubes de refroidissement (5) peuvent être mis sous pression.

8. Refroidisseur à tubes rotatifs (1) selon l'une des revendications précédentes, **caractérisé en ce que** le sens d'écoulement du milieu de refroidissement va au choix à l'encontre ou dans le sens de transport de la matière à refroidir.

9. Refroidisseur à tubes rotatifs (1) selon l'une des revendications précédentes, **caractérisé en ce que** des éléments (12) sont prévus à l'intérieur des tubes de transport (2), lesquels favorisent le mélange et la circulation de la matière à refroidir.

10. Refroidisseur à tubes rotatifs (1) selon la revendication 9, **caractérisé en ce que** les éléments (12) sont disposés sensiblement dans la direction longitudinale des tubes de transport (2).

11. Refroidisseur à tubes rotatifs (1) selon l'une des revendications précédentes, **caractérisé en ce que** l'espace annulaire (A) entre le tube de transport (2) et le tube de refroidissement (2) comprend des éléments (12) qui favorisent un écoulement turbulent du milieu de refroidissement.

12. Refroidisseur à tubes rotatifs (1) selon l'une des revendications 1 à 10, **caractérisé en ce qu'**au moins un élément directeur d'écoulement (14) est prévu dans l'espace annulaire entre le tube de transport et le tube de refroidissement.

13. Refroidisseur à tubes rotatifs (1) selon la revendication 12, **caractérisé en ce que** ledit au moins un élément directeur d'écoulement (14) est disposé sur la paroi extérieure d'un tube de transport (2).

14. Refroidisseur à tubes rotatifs (1) selon la revendication 13, **caractérisé en ce que** ledit au moins un élément directeur d'écoulement (14) est disposé sous la forme d'une hélice sur la paroi extérieure d'un tube de transport (2).

15. Refroidisseur à tubes rotatifs (1) selon l'une des revendications précédentes, **caractérisé en ce que** les tubes de refroidissement (5) sont équipés de compensateurs (15) qui compensent les contraintes thermiques.

16. Procédé de refroidissement d'une matière en vrac au moyen d'un refroidisseur à tubes rotatifs selon l'une des revendications 1 à 15.

17. Procédé de refroidissement d'une matière en vrac selon la revendication 16, comprenant les étapes consistant à :
1. introduire une matière à refroidir dans un tube de transport qui est entouré par un tube de refroidissement dans lequel s'écoule un milieu de refroidissement, le milieu de refroidissement étant de l'eau ;
2. transporter la matière à refroidir d'une extrémité du tube de transport à son autre extrémité, la matière à refroidir étant refroidie en continu par le milieu de refroidissement;
3. faire tourner en continu les tubes de transport autour d'un axe ;
4. faire sortir la matière de transport refroidie.

18. Procédé de refroidissement d'une matière en vrac selon la revendication 17, comprenant en outre l'étape selon laquelle le milieu de refroidissement est mis en turbulence par des chicanes dans l'espace annulaire entre le tube de transport et le tube de refroidissement.
